# EUROPEAN PATENT SPECIFICATION

(11) **EP 4 291 475 B1**
(45) Date of publication and mention of the grant of the patent: **03.06.2026**
(21) Application number: 22705184.4
(22) Date of filing: 03.02.2022
(51) Int. Cl.: B62K 23/04, B62M 25/04

(54) **TWO-WAY GEAR SHIFT OPERATOR, ACTUATOR AND GEAR SHIFT SYSTEM**
BETÄTIGUNGSVORRICHTUNG FÜR ZWEI-WEGE-GANGSCHALTUNG, BETÄTIGUNGSVORRICHTUNG UND GANGSCHALTSYSTEM
OPÉRATEUR DE CHANGEMENT DE VITESSE À DEUX VOIES, ACTIONNEUR ET SYSTÈME DE CHANGEMENT DE VITESSE

(30) Priority: 15.02.2021 NO 20210189
(43) Date of publication of application: 20.12.2023
(73) Proprietor: Mont Invest 30 AS, 0167 Oslo (NO)
(72) Inventor: WEUM, Dag Trygve, 1481 Hagan (NO)
(74) Representative: LIGL IP Consult AS
(86) International application number: PCT/NO2022/050030
(87) International publication number: WO 2022/173307

(56) References cited:
- WO-A1-2015/020518
- ROHLOFF SPEEDHUB TEAM: "Schaltgriff - Rohloff AG", 1 January 2011 (2011-01-01), XP055907833, Retrieved from the Internet <URL:https://www.rohloff.de/de/service/handbuch/speedhub/montage/schaltgriff> [retrieved on 20220401]
- ROHLOFF SPEEDHUB TEAM: "Schaltzugverlegung - Rohloff AG", 27 November 2020 (2020-11-27), XP055907847, Retrieved from the Internet <URL:https://web.archive.org/web/20201127135124/https://www.rohloff.de/de/service/handbuch/speedhub/montage/schaltzugverlegung> [retrieved on 20220401]
- ROHLOFF: "Schaltzugverlegung", 27 November 2020 (2020-11-27), XP055908530, Retrieved from the Internet <URL:https://www.rohloff.de/de/service/handbuch/speedhub/montage/schaltzugverlegung> [retrieved on 20220404]

## Description

### TECHNICAL FIELD

The present invention relates gear shifting, and especially the shifting of gears on pedally propelled vehicles, such as bicycles. More specifically the invention is related to a gear shift operator, a gear shift actuator and a gear system comprising such gear shift operator and gear shift actuator.

### BACKGROUND

Two-way gear shifting is far less common than one-way shifting in todays market. However, two way-shifting has a number of advantages over one-way shifting with one wire. While it is in general possible to apply more torque riding a bike with a one-way gear system usually can apply more torque to a shift operator in one direction, e.g. to force the shift to a lower gear to a shift operator in one direction, torque in the opposite direction is reliant on the spring force of the gear system in the opposite direction, e.g. shifting to higher gears. Typically, derailleur gears are one-way operated and comprises a return spring. In addition, most hub-integrated multispeed-gears are also one-way operated.

US 6055882A discloses a one-way twist-grip shifter for bicycles having a twist grip, which twist grip includes an outer grip part and an inner twist part.

WO2012128639A1 and WO2020130841 disclose two-way multi-speed gear systems for a pedally propelled vehicle and are configured to be operated by a two-way gear shift system.

WO2017149396A2 discloses a hydraulic two-way gear system comprising a pair of separate hydraulic thumb operators and a corresponding two-way hydraulic gear actuator.

Rohloff Speedhub Team: "Schaltgriff - Rohloff AG"" 1 January 2011 (2011-01-01) shows the preamble of claim 1.

However, riders have different preferences, and while thumb operators perform well for many riders, some prefer twist operators.

Twist shift operators are well known for one-way gear shift systems but cannot be easily adapted to two-way operators. Likewise, the one-way actuator interfacing the one-way actuator is very far from a two-way actuator, since it is basically a return spring in one direction.

While gear shift systems with two-way gear units shifted by reciprocating twist-operators are known, they are costly to manufacture due to their internal complexity and relatively large weight.

It is a goal with the present invention to solve the problem of large investments in manufacturing tools, and at the same time reduce the weight of the gear system, both on the operator and the actuator side.

### SHORT SUMMARY

The invention is a two-way gear shift operator, a corresponding two-way gear shift actuator and a two-way gear shift system comprising such operator and actuator according to the independent claims.

The shift system has one or more of the following advantages over prior art.

First of all, the production line for manufacturing the two-way gear shift operator, the two-way gear shift actuator and the two-way gear shift system is less complex than the production lines used for prior art systems due to the design of the components.

Consequently, the initial and ongoing production costs are reduced.

This allows production of smaller series and tailored production of the components, e.g. for different wire connections.

Further, the present invention has the advantage that both the shift operator and the shift actuator have reduced weights.

### BRIEF DESCRIPTION OF THE DRAWINGS

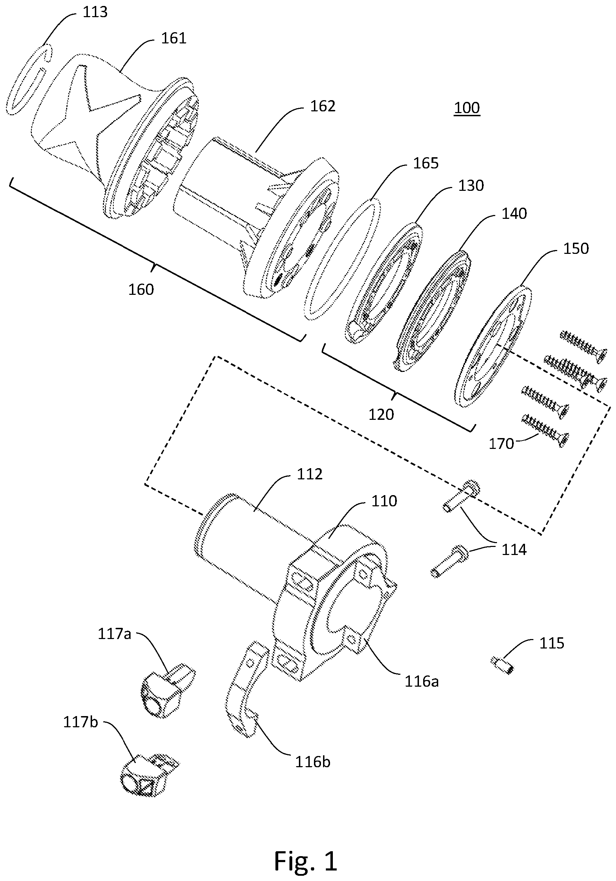

Fig. 1 illustrates, in an exploded view, a two-way gear shift operator 100 according to an embodiment of the invention.

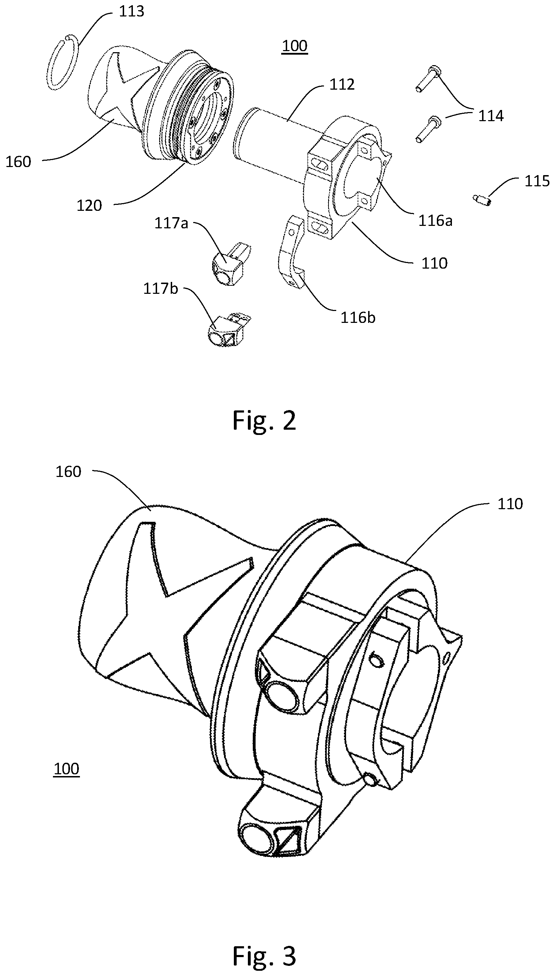

Fig. 2 illustrates, in a partly exploded view the same gear shift operator 100 as in Fig. 1
Fig. 3 Illustrates in an isometric view the gear shift operator in Fig. 1.

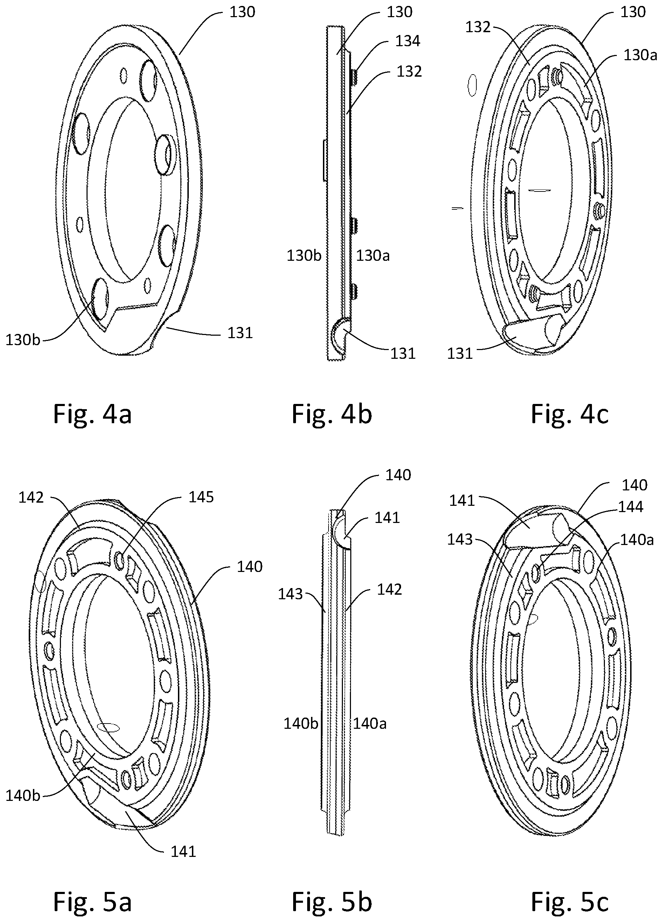

Fig. 4a, 4b and 4c illustrate the outer spool plate of Fig. 1 in more detail.
Fig. 5a, 5b and 5c illustrate the middle spool plate of Fig. 1 in more detail.

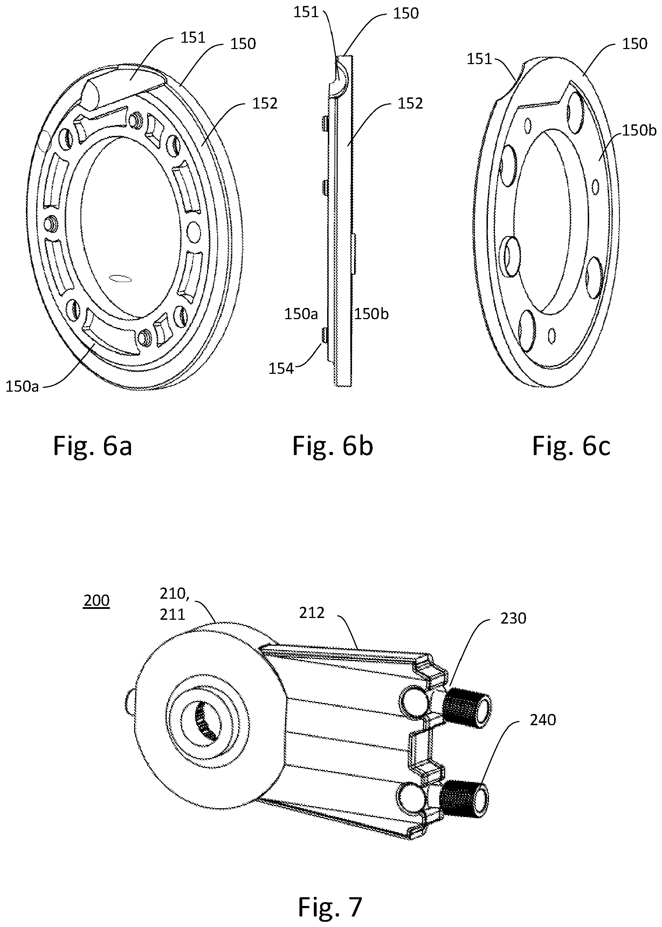

Fig. 6a, 6b and 6c illustrate the inner spool plate of Fig. 1 in more detail.
Fig. 7 illustrates in an isometric view a two-way gear shift actuator 200 according to an embodiment of the invention.

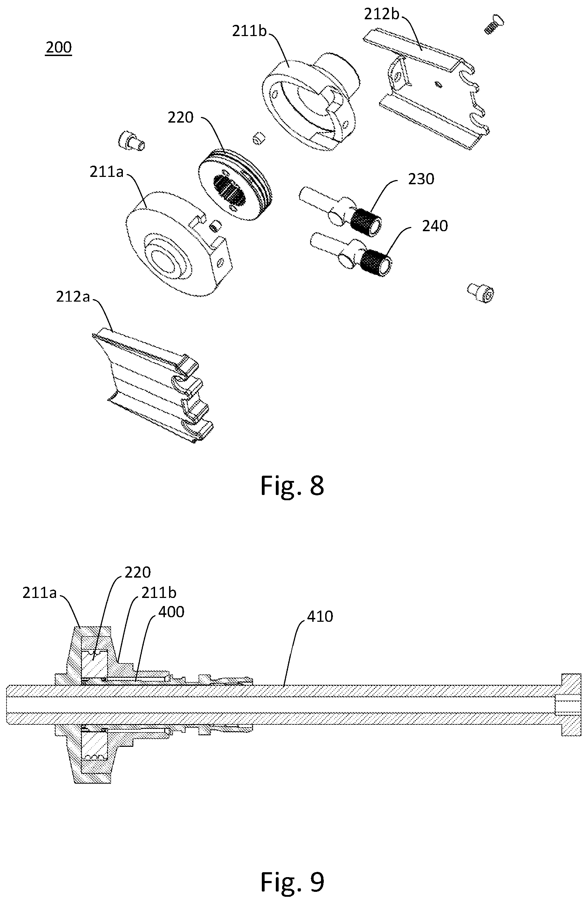

Fig. 8 illustrates an exploded view of the gear shift actuator of Fig. 7.
Fig. 9 illustrates a section view of the gear shift actuator, in a plane perpendicular to the through bore of the wire spool 220. In addition, the view illustrates a shift axle 400 of a multi-speed gear system, where the shift axle has outer teeth meshing with inner teeth of the wire spool. The shift axle illustrated is hollow, allowing a through bolt 410 to be arranged through the shift axle and the gear shift actuator.

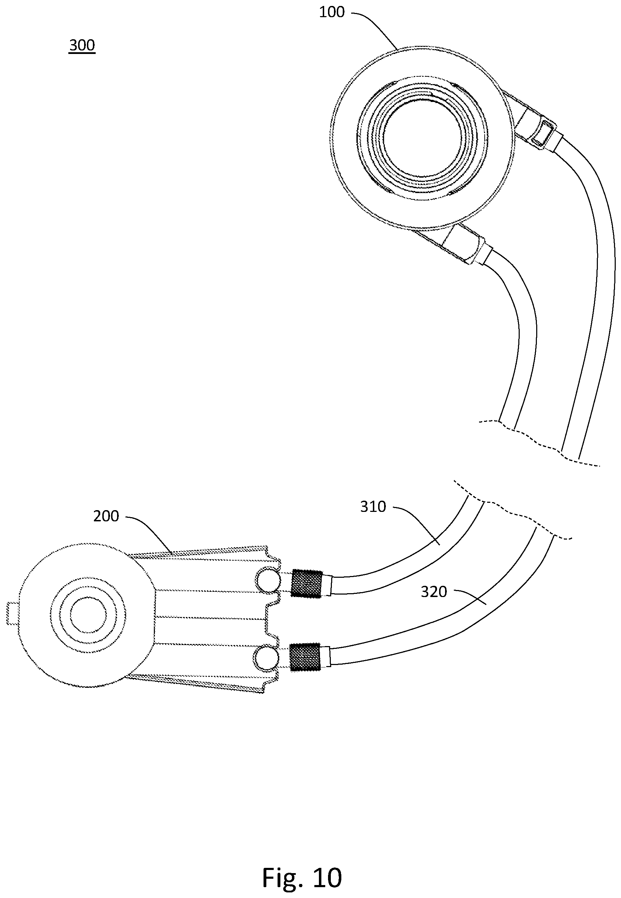

Fig. 10 illustrates a two-way ger shift system 300 comprising the two-way gear shift operator 100 of Fig. 3 connected to the two-way gear shift actuator 200. First and second shift cables 310, 320 with inner wires are used for the interconnection. The shift operator 100 is typically arranged on the end of a handlebar, while the shift actuator is arranged adjacent to the hub of a pedally propelled vehicle. The first and second shift cables may be running along parts of the frame, and/or partly inside the frame.

### EMBODIMENTS

In the following description, various examples and embodiments of the invention are set forth in order to provide the skilled person with a more thorough understanding of the invention. The specific details described in the context of the various embodiments and with reference to the attached drawings are not intended to be construed as limitations. Rather, the scope of the invention is only defined in the appended claims.

The embodiments described below are numbered and prefixed with "EM". In addition, dependent embodiments defined in relation to the numbered embodiments are described. EM O1: A two-way gear shift operator 100 for a handlebar of a pedally propelled vehicle, comprising
- a housing 110 with a cylindrical extension 112, configured to be arranged on the handlebar
- a shift handle 160 rotationally arranged on the cylindrical extension, wherein the shift handle comprises;
a two-way wire spool 120 fixed to the shift handle, comprising first, second and third spool plates 130, 140, 150.

In a first dependent embodiment the first and third spool plates 130, 150 are identical.

In a second dependent embodiment that may be combined with the first dependent embodiment, the second spool plate 140 is arranged between the first and third spool plates 130, 150.

In a third dependent embodiment that may be combined with the second dependent embodiment, the first, second and third spool plates 130, 140 150 have first and second sides 130a, 130b, 140a, 140b, 150a, 150b, respectively, wherein the first side of the first spool plate is identical to the first side of the third spool plate, the second side of the first spool plate is identical to the second side of the third spool plate, and the first and second sides of the second spool plate are identical, wherein the first side of the first spool plate faces the second side of the second spool plate and the first side of the third spool plate faces the first side of the second spool plate.

In a fourth dependent embodiment, that may be combined with any of the dependent embodiments above, the first second and third spool plates have a through hole for the cylindrical extension, wherein the through hole of the second spool plate has a smaller diameter than the through holes of the first and second spool plates.

In a fifth dependent embodiment that may be combined with the fourth dependent embodiment, the diameter of the through hole of the second spool plate corresponds to the outer diameter of the cylindrical extension.

In this way, it is possible to obtain an improved support for the rotating shift handle.

In a sixth dependent embodiment, that may be combined with any of the embodiments above, the housing comprises a clamp configured to clamp the housing to the handlebar, wherein the clamp comprises first and second clamp portions 116a, 116b.

The first clamp portion may be integrated with the housing and the second clamp portion may be clamped to the first clamp portion with screws 114.

In a seventh dependent embodiment, that may be combined with any of the embodiments above, the housing 110 comprises through holes with respective cable stops 117a, 117b.

In an eight embodiment, that may be combined with any of the embodiments above, the two-way gear shift operator comprises an end stop mechanism configured to prevent the shift handle to rotate a full circle.

In ninth embodiment, dependent on the eight embodiment, the stop mechanism comprises a groove in the second side of the third spool plate and a protrusion in the housing extending into the groove, wherein the groove extends in less than a full circle in the location of the protrusion.

The protrusion may be e.g. a metal pin.

EM O2: The two-way gear shift operator 100 according to EM O1, wherein the wire spool comprises first and second shift wire connections, configured to be connected to first and second shift wires, respectively, wherein the wire spool is configured to pull the first shift wire when the shift handle is rotated in a first direction, and pull the second shift wire when the shift handle is rotated in a second direction, opposite the first direction.

In a first dependent embodiment the first wire connection comprises a first wire connection portion in the first spool plate and a second wire connection portion in the second spool plate.

In a second dependent embodiment, the second wire connection comprises a first wire connection portion in the third spool plate and a second wire connection portion in the second spool plate.

In a third dependent embodiment the first and second wire connection portions of the first and second wire connection portions faces each other to form the first and second wire connections.

In a fourth dependent embodiment the first and second wire connections have the shape of half cylinders.

EM O3: The two-way gear shift operator 100 according to EM O1 or EM O2, wherein the first side 130a, 150a of first and third spool plates 130, 150 and the first and second sides 140a, 140b of the second spool plate 140 comprises a first plate first side, third plate first side and second plate first and second side wire guide path portions 132, 152 and 142, 143, respectively.

In a first dependent embodiment, the first plate first side wire guide path portion 132 is symmetrically identical to the second side second plate wire guide path portion 143 and the third plate first side wire guide path portion 152 is symmetrically identical to the first side second plate wire guide path portion 142.

In a second dependent embodiment the first plate first side wire guide path portion 132 and the second side second plate wire guide path portion 143 form a first circumferential groove in the wire spool. The third plate first side wire guide path portion 152 and the first side second plate wire guide path portion 142 form a second circumferential groove in the wire spool.

In a third dependent embodiment the first and second circumferential grooves are configured to guide and support the first and second wires, wherein a section perpendicular to the grooves they have a constant radius in a sector of 90 degrees.

In a fourth dependent embodiment, the
EM O4: The two-way gear shift operator 100 according to any of EM O1 to EM O3, comprising screws 170, wherein the two-way wire spool 120 comprises through holes, and the shift handle 160 comprises holes, wherein the screws are arranged through the through holes and fixed in the holes.

In a first dependent embodiment the first and second spool plates comprises first and second rotational guiding 134, 145 means, respectively, configured to determine a relative rotational position of the first and second spool plates. The third and second spool plates comprises first and first rotational guiding 154, 144 means, respectively, configured to determine a relative rotational position of the third and second spool plates.

The two-way gear shift operator 100 according to any of EM O1 to EM O4, wherein the shift handle 160 comprises a grip portion 161, and a support portion 162, wherein the support portion is at least partly cylindrical and configured to be arranged to rotate about the cylindrical portion, wherein the grip portion is arranged radially outside the support portion.

In a first dependent embodiment, the grip portion is press-fit onto the support portion. Alternatively, the grip portion and the support portion are manufactured by over-molding the grip portion onto the support portion.

In a second dependent embodiment, the two way gear shift operator comprises a locking element 113 configured to lock the support portion in the longitudinal direction to the cylindrical portion.

The support portion may e.g. be made in a plastic material, and the grip portion in a relatively softer plastic material.

EM A1: A two-way gear shift actuator 200 for a pedally propelled vehicle, comprising
- a housing 210,
- a two-way wire spool 220 arranged in the housing 210, and configured to rotate a shift axle 400 of a multi speed gear, wherein the wire spool and the housing has through bores, wherein the through bore of the wire spool is configured to hold the shift axle.

In a first dependent embodiment, the housing comprises first and second removable house elements 211a, 211b.

In a second dependent embodiment, the first house element is configured to be removably mounted outside the first house element in the direction of the through bores.

In a third dependent embodiment, the first and second house elements are at least partly cylindrical, wherein the outer diameter of the second house element corresponds to the inner diameter of the first house element.

EM A2: The two-way gear shift actuator 200 of EM A1, comprising an extension housing 212, fixed to the housing 210.

In a first dependent embodiment, the extension housing comprises first and second cable adjusters 230, 240.

In a second dependent embodiment, the cable adjusters are configured to pivot in a direction parallel to the plane of the wire spool.

In a third dependent embodiment, the extension housing comprises first and second barrel nuts, wherein the cable adjusters are fixed to the barrel nuts.

In a fourth dependent embodiment, the extension housing comprises first and second house elements 212a, 212b.

In a fifth dependent element, the first and second house elements are made in sheet metal.

In a fifth dependent embodiment, the first house element 212a is configured to be removably mounted at least partly inside the second house element 212b.

In a sixth dependent embodiment, the first and second barrel nuts are locked between the first and second house elements.

EM S1: A two-way gear shift system 300 for a pedally propelled vehicle comprising;
- a two-way gear shift operator 100 according to any of EO1 to EO5,
- a two-way gear shift actuator 200 according to any of EM1 to EM2,
- first and second shift cables 310, 320 comprising shift wires interconnecting the two-way gear shift operator and the two-way gear shift actuator.

In a first dependent embodiment, the two-way gear shift system comprises a shift axle 400 configured to be arranged in a multi-speed gear system.

In a second dependent embodiment the shift axle 400 is hollow and configured to allow a through bolt 410 for fixing a wheel hub to a frame of a pedally propelled vehicle.

## Claims

1. A two-way gear shift operator (100) for a handlebar of a pedally propelled vehicle, comprising
- a housing (110) with a cylindrical extension (112), configured to be arranged on the handlebar
- a shift handle (160) rotationally arranged on the cylindrical extension, wherein the shift handle comprises a two-way wire spool (120) fixed to the shift handle, comprising first, second and third spool plates (130, 140, 150), **characterized in that** the first and third spool plates (130, 150) are identical, and the second spool plate (140) is arranged between the first and third spool plates 130, 150), and wherein the first, second and third spool plates comprise screw through-holes and the shift handle (160) comprises holes, and screws (170) are arranged through the through-holes and into the holes of the shift handle, thereby fixing the wire spool (120) to the shift handle.

2. The two-way gear shift operator (100) of claim 1, wherein the first, second and third spool plates (130, 140 150) have first and second sides (130a, 130b, 140a, 140b, 150a, 150b), respectively, wherein the first side of the first spool plate is identical to the first side of the third spool plate, the second side of the first spool plate is identical to the second side of the third spool plate, and the first and second sides of the second spool plate are identical, wherein the first side of the first spool plate faces the second side of the second spool plate and the first side of the third spool plate faces the first side of the second spool plate.

3. The two-way gear shift operator (100) of any of the claims 1 to 2, wherein, the first second and third spool plates have a through hole for the cylindrical extension, wherein the through hole of the second spool plate has a smaller diameter than the through holes of the first and second spool plates.

4. A two-way gear shift actuator (200) for a pedally propelled vehicle, comprising
- a housing (210),
- a two-way wire spool (220) arranged in the housing (210), and configured to rotate a shift axle (400) of a multi speed gear, wherein the wire spool and the housing has through bores, wherein the through bore of the wire spool is configured to hold the shift axle, wherein the two-way gear shift actuator (200) comprises an extension housing (212), fixed to the housing (210), wherein the extension housing comprises first and second cable adjusters (230, 240), wherein the cable adjusters are configured to pivot in a direction parallel to the plane of the wire spool.

5. The two-way gear shift actuator (200) according to claim 4, wherein the housing comprises first and second removable house elements (211a, 211b), wherein the first house element is configured to be removably mounted outside the first house element in the direction of the through bores.

6. The two-way gear shift actuator of claim 4 or 5, wherein the extension housing comprises first and second house elements (212a, 212b), wherein the first and second house elements are made in sheet metal.

7. A two-way gear shift system (300) for a pedally propelled vehicle, comprising;
- a two-way gear shift operator (100) according to any of claims 1 to 4,
- a two-way gear shift actuator (200) according to any of claims 5 to 7,
- first and second shift cables (310, 320) comprising shift wires interconnecting the two-way gear shift operator (100) and the two-way gear shift actuator (200).

8. The two-way gear shift system of claim 7, wherein the shift axle 400 is hollow and configured to allow a through bolt (410) for fixing a wheel hub to a frame of a pedally propelled vehicle.

## Patentansprüche

1. Zweiwege-Getriebeschaltbedienvorrichtung (100) für eine Lenkstange eines pedalgetriebenen Fahrzeugs, umfassend:
- ein Gehäuse (110) mit einer zylindrischen Verlängerung (112), die dazu konfiguriert ist, an der Lenkstange angeordnet zu sein
- einen Schaltgriff (160), der drehbar an der zylindrischen Verlängerung angeordnet ist, wobei der Schaltgriff eine an dem Schaltgriff befestigte Zweiwege-Drahtspule (120) umfasst, die erste, zweite und dritte Spulenplatten (130, 140, 150) umfasst, **gekennzeichnet dadurch, dass** die erste und die dritte Spulenplatte (130, 150) identisch sind, und die zweite Spulenplatte (140) zwischen der ersten und der dritten Spulenplatte (130, 150) angeordnet ist, und wobei die erste, die zweite und die dritte Spulenplatte Schraubendurchgangslöcher umfassen und der Schaltgriff (160) Löcher umfasst, und Schrauben (170) durch die Durchgangslöcher und in die Löcher des Schaltgriffs angeordnet sind, wodurch die Drahtspule (120) an dem Schaltgriff befestigt ist.

2. Zweiwege-Getriebeschaltbedienvorrichtung (100) nach Anspruch 1, wobei die erste, die zweite und die dritte Spulenplatte (130, 140, 150) jeweils eine erste und eine zweite Seite (130a, 130b, 140a, 140b, 150a, 150b) aufweisen, wobei die erste Seite der ersten Spulenplatte identisch mit der ersten Seite der dritten Spulenplatte ist, die zweite Seite der ersten Spulenplatte identisch mit der zweiten Seite der dritten Spulenplatte ist und die erste und die zweite Seite der zweiten Spulenplatte identisch sind, wobei die erste Seite der ersten Spulenplatte der zweiten Seite der zweiten Spulenplatte zugewandt ist und die erste Seite der dritten Spulenplatte der ersten Seite der zweiten Spulenplatte zugewandt ist.

3. Zweiwege-Getriebeschaltbedienvorrichtung (100) nach einem der Ansprüche 1 bis 2, wobei die erste, die zweite und die dritte Spulenplatte ein Durchgangsloch für die zylindrische Verlängerung aufweisen, wobei das Durchgangsloch der zweiten Spulenplatte einen kleineren Durchmesser aufweist als die Durchgangslöcher der ersten und der zweiten Spulenplatte.

4. Zweiwege-Getriebeschaltaktuator (200) für ein pedalgetriebenes Fahrzeug, umfassend:
- ein Gehäuse (210),
- eine Zweiwege-Drahtspule (220), die in dem Gehäuse (210) angeordnet und dazu konfiguriert ist, eine Schaltachse (400) eines Mehrgeschwindigkeitsgetriebes zu drehen, wobei die Drahtspule und das Gehäuse Durchgangsbohrungen aufweisen, wobei die Durchgangsbohrung der Drahtspule dazu konfiguriert ist, die Schaltachse zu halten, wobei der Zweiwege-Getriebeschaltaktuator (200) ein Verlängerungsgehäuse (212) umfasst, das an dem Gehäuse (210) befestigt ist, wobei das Verlängerungsgehäuse erste und zweite Kabeleinsteller (230, 240) umfasst, wobei die Kabeleinsteller dazu konfiguriert sind, in eine Richtung parallel zu der Ebene der Drahtspule zu schwenken.

5. Zweiwege-Getriebeschaltaktuator (200) nach Anspruch 4, wobei das Gehäuse erste und zweite abnehmbare Hauselemente (211a, 211b) umfasst, wobei das erste Hauselement dazu konfiguriert ist, abnehmbar außerhalb des ersten Hauselements in der Richtung der Durchgangsbohrungen montiert zu sein.

6. Zweiwege-Getriebeschaltaktuator nach Anspruch 4 oder 5, wobei das Verlängerungsgehäuse erste und zweite Hauselemente (212a, 212b) umfasst, wobei das erste und das zweite Hauselement aus Blech hergestellt sind.

7. Zweiwege-Getriebeschaltsystem (300) für ein pedalgetriebenes Fahrzeug, umfassend:
- eine Zweiwege-Getriebeschaltbedienvorrichtung (100) nach einem der Ansprüche 1 bis 4,
- einen Zweiwege-Getriebeschaltaktuator (200) nach einem der Ansprüche 5 bis 7,
- erste und zweite Schaltkabel (310, 320), umfassend Schaltdrähte, die die Zweiwege-Getriebeschaltbedienvorrichtung (100) und den Zweiwege-Getriebeschaltaktuator (200) miteinander verbinden.

8. Zweiwege-Getriebeschaltsystem nach Anspruch 7, wobei die Schaltachse 400 hohl ist und dazu konfiguriert ist, einen Durchgangsbolzen (410) zum Befestigen einer Radnabe an einem Rahmen eines pedalgetriebenen Fahrzeugs zu ermöglichen.

## Revendications

1. Opérateur de changement de pignon à deux voies (100) pour un guidon d'un véhicule propulsé par pédales, comprenant
- un boîtier (110) avec une extension cylindrique (112), configuré pour être agencé sur le guidon
- une poignée de changement de vitesse (160) agencée en rotation sur l'extension cylindrique, dans laquelle la poignée de changement de vitesse comprend une bobine de fil à deux voies (120) fixée à la poignée de changement de vitesse, comprenant une première, une deuxième et une troisième plaque porte-bobine (130, 140, 150), **caractérisées en ce que** les première et troisième plaques porte-bobine (130, 150) sont identiques, et la deuxième plaque porte-bobine (140) est agencée entre les première et troisième plaques porte-bobine (130, 150), et dans lesquelles les première, deuxième et troisième plaques porte-bobine comprennent des trous de passage de vis et la poignée de changement de vitesse (160) comprend des trous, et des vis (170) sont agencées au travers des trous de passage et à l'intérieur des trous de la poignée de changement de vitesse, fixant de ce fait la bobine de fil (120) à la poignée de changement de vitesse.

2. Opérateur de changement de pignon à deux voies (100) selon la revendication 1, dans lequel les première, deuxième et troisième plaques porte-bobine (130, 140, 150) ont un premier et un deuxième côté (130a, 130b, 140a, 140b, 150a, 150b), respectivement, dans lesquelles le premier côté de la première plaque porte-bobine est identique au premier côté de la troisième plaque porte-bobine, le deuxième côté de la première plaque porte-bobine est identique au deuxième côté de la troisième plaque porte-bobine, et les premier et deuxième côtés de la deuxième plaque porte-bobine sont identiques, dans lesquelles le premier côté de la première plaque porte-bobine fait face au deuxième côté de la deuxième plaque porte-bobine et le premier côté de la troisième plaque porte-bobine fait face au premier côté de la deuxième plaque porte-bobine.

3. Opérateur de changement de pignon à deux voies (100) selon l'une quelconque des revendications 1 à 2, dans lequel les première, deuxième et troisième plaques porte-bobine ont un trou de passage pour l'extension cylindrique, dans lesquelles le trou de passage de la deuxième plaque porte-bobine a un diamètre plus petit que les trous de passage de la première et de la deuxième plaques porte-bobine.

4. Actionneur de changement de pignon à deux voies (200) pour un véhicule propulsé par pédales, comprenant
- un boîtier (210),
- une bobine de fil à deux voies (220) agencée dans le boîtier (210), et configurée pour entraîner en rotation un axe de changement (400) d'une cassette multi-vitesses, dans lequel la bobine de fil et le boîtier a des trous traversants, dans laquelle le trou traversant de la bobine de fil est configuré pour tenir l'axe de changement, dans lequel l'actionneur de changement de pignon à deux voies (200) comprend un boîtier d'extension (212), fixé au boîtier (210), dans lequel le boîtier d'extension comprend un premier et un second ajusteurs de câble (230, 240), dans lequel les ajusteurs de câble sont configurés pour pivoter dans une direction parallèle au plan de la bobine de fil.

5. Actionneur de changement de pignon à deux voies (200) selon la revendication 4, dans lequel le boîtier comprend un premier et un deuxième élément de boîtier amovibles (211a, 211b), dans lequel le premier élément de boîtier est configuré pour être monté de manière amovible à l'extérieur du premier élément de boîtier dans la direction des trous traversants.

6. Actionneur de changement de pignon à deux voies selon la revendication 4 ou 5, dans lequel le boîtier d'extension comprend un premier et un deuxième élément de boîtier (212a, 212b), dans lesquels les premier et deuxième éléments de boîtier sont fabriqués en tôle métallique.

7. Système de changement de pignon à deux voies (300) pour un véhicule propulsé par pédales, comprenant ;
- un opérateur de changement de pignon à deux voies (100) selon l'une quelconque des revendications 1 à 4,
- un actionneur de changement de pignon à deux voies (200) selon l'une quelconque des revendications 5 à 7,
- un premier et un deuxième câble de changement (310, 320) comprenant des fils de changement interconnectant l'opérateur de changement de pignon à deux voies (100) et l'actionneur de changement de pignon à deux voies (200).

8. Système de changement de pignon à deux voies selon la revendication 7, dans lequel l'axe de changement 400 est vide et configuré pour accueillir un boulon de traversée (410) pour la fixation d'un moyeu de roue à un cadre d'un véhicule propulsé par pédales.
